Europäisches Patentamt

European Patent Office

Office européen des brevets

(19)

(11) Veröffentlichungsnummer: **0 016 864**
**B1**

(12) **EUROPÄISCHE PATENTSCHRIFT**

(45) Veröffentlichungstag der Patentschrift: **16.11.83**

(21) Anmeldenummer: **79104900.0**

(22) Anmeldetag: **04.12.79**

(51) Int. Cl.³: **B 60 S 1/08**

(54) Intervallschaltung für einen Kraftfahrzeugscheibenwischermotor.

(30) Priorität: **23.03.79 DE 2911554**

(43) Veröffentlichungstag der Anmeldung:
**15.10.80 Patentblatt 80/21**

(45) Bekanntmachung des Hinweises auf die Patenterteilung:
**16.11.83 Patentblatt 83/46**

(84) Benannte Vertragsstaaten:
**FR GB SE**

(56) Entgegenhaltungen:
**DE - A - 2 158 064**
**DE - A - 2 730 409**
**DE - B - 2 407 812**
**DE - B - 2 436 302**
**DE - B - 2 455 760**
**DE - B - 2 505 865**
**DE - B - 2 643 567**

(73) Patentinhaber: **Leopold KostalGmbH & Co. KG**
**Wiesenstrasse 47**
**D-5880 Lüdenscheid (DE)**

(72) Erfinder: **Bergmann, Eduard**
**Altenaer Strasse 2**
**D-5880 Lüdenscheid (DE)**
Erfinder: **Hülsmann, Ulrich**
**Volmestrasse 56**
**D-5800 Hagen (DE)**

(74) Vertreter: **Hassler, Werner, Dr. et al,**
**Patentanwälte Dr. W. Hassler, Dipl.-Chem. F.**
**Schrumpf Postfach 1704**
**D-5880 Lüdenscheid (DE)**

Courier Press, Leamington Spa, England.

Intervallschaltung für einen Kraftfahrzeugscheibenwischermotor

Die Erfindung betrifft eine Intervallschaltung für einen Kraftfahrzeugscheibenwischermotor mit einem Umschalter, der bei Ansteuerung durch eine elektronische Schaltstufe den Motor mit der Versorgungsspannung verbindet, und mit einem Endabstellungsschalter, dessen Umschaltkontakt in der Betrtiebsstellung des Motors mit der Versorgungsspannung und in der Endstellung mit dem Bezugspotential verbunden ist.

— die elektronische Schaltstufe ist an einen Steuerausgang einer Schwellenwertschaltung angeschlossen, die ihrerseits durch eine von einem RC-Glied zwischen Kondensator und Ladewiderstand abgegriffene Spannung ansteuerbar ist;

— das RC-Glied ist zwischen der Vorsorgungsspannung und einem Umladeanschluß angeschlossen, der entweder mit der Versorgungsspannung oder mit dem Bezugspotential verbindbar ist, wobei die Umladegeschwindigkeit die Paunsenzeit der Intervallschaltung bestimmt.

Eine bekannte Intervallschaltung dieser Art nach der DE—B1—2 455 760 besitzt als elektronische Schaltstufe eine Verstärkerstufe mit hohem Verstärkungsgrad, die von dem RC-Glied angesteuert wird, dessen Spannung sich zeitabhängig ändert. Das RC-Glied wird über den Endabstellungskontakt des Scheibenwischermotors an Versorgungsspannung bzw. Bezugsspannung gelegt, so daß die Intervalldauer von den sich ändernden Laufeigenschaften des Scheibenwischermotors abhängt. Die Intervalldauer, insbesondere die Pausenzeit dieser Schaltung schwankt in Abhängigkeit von sich ändernden Betriebsgrößen.

Eine ähnliche Schaltung ist der DE—A—2 158 064 entnehmbar.

Eine weitere Intervallschaltung ist in der DE—B2—2 436 302 beschrieben. Bei dieser Schaltung ist das RC-Glied Bestandteil einer astabilen Kippstufe. Der Ladestrom des RC-Gliedes fließt jedoch außerdem über den Schalttransistor der elektronischen Schaltstufe. Diese Schaltung ist außerordentlich instabil. Vor allem sind keine definierten Schaltschwellen vorhanden.

Aufgabe der Erfindung ist eine solche Ausbildung einer Intervallschaltung der genannten Art, daß sichere Schaltschwellen vorhanden sind. Sowohl die Pausenzeit als auch die Einschaltzeit der elektronischen Schaltstufe sollen unabhängig voneinander und unabhängig vom Lauf des Scheibenwischermotors vorgebbar sein.

Diese Aufgabe wird nach der Erfindung durch folgende Merkmale gelöst:

— die Schwellenwertschaltung spricht auf eine Umschaltspannung und eine davon verschiedene Rückschaltspannung an ihrem Schwellenwerteingang an und weist als Ausgang den genannten Umladeanschluß auf;

— das RC-Glied wird aufgrund der nach Umschaltung am Umladeausgang auftretenden Bezugsspannung über einen in Reihe mit dem Kondensator liegenden Widerstand und einen für den Aufladestrom durchlässigen Richtleiter aufgeladen und aufgrund der Versorgungsspannung am Umladeausgang über einen parallel zum Kondensator liegenden Widerstand entladen.

Die Erfindung unterscheidet sich dadurch in nicht naheliegender Weise vom Stand der Technik, als das RC-Glied aus der Schwellenwertschaltung herausgenommen ist. Die Schwellenwertschaltung liefert eine Umladespannung für das RC-Glied, so daß das RC-Glied zusammen mit der Schwellenwertschaltung eine astabile Kippstufe bildet. Das RC-Glied enthält parallel zum Kondensator und in Reihe zum Kondensator jeweils einen Widerstand, wobei der parallel zum Kondensator liegende Widerstand den Entladestrom führt und damit die Pausenzeit festlegt. Der Ladestrom fließt dagegen über beide Widerstände, insbesondere über den in Reihe zum Kondensator liegenden Widerstand, so daß durch diesen Widerstand die Einschaltdauer festgelegt werden kann. Die Pausenzeit und die Einschaltdauer sind also unabhängig voneinander festlegbar. Dadurch erreicht man einen sicheren Betrieb der Intervallschaltung. Veränderliche Bedingungen für den Lauf des Scheibenwischermotors, etwa der sich ändernde Zustand der vom Scheibenwischer überstrichenen Scheibe, beeinflussen die Intervallschaltung nicht.

In weiterer Ausbildung sicht die Erfindung eine Synchronisierung der astabilen Kippstufe durch den Endabstellungsschalter vor. Denn in manchen Fällen ist es erwünscht, nicht die Einsatzzeiten der Intervalle festzulegen, sondern vielmehr mit einer definierten Pausenzeit zu arbeiten.

Der Wischimpulsgeber nach der Erfindung kann auch mit dem Trockenwischkreis zusammen zur Steuerung des Trockenwischintervalls ausgenutzt werden.

Ausführungsformen der Erfindung werden im folgenden unter Bezugnahme auf die Zeichnungen erläutert, in denen darstellen;

Fig. 1 ein Schaltbild einer ersten Ausführungsform der Erfindung und

Fig. 2 ein Schaltbild einer zweiten Ausführungsform der Erfindung.

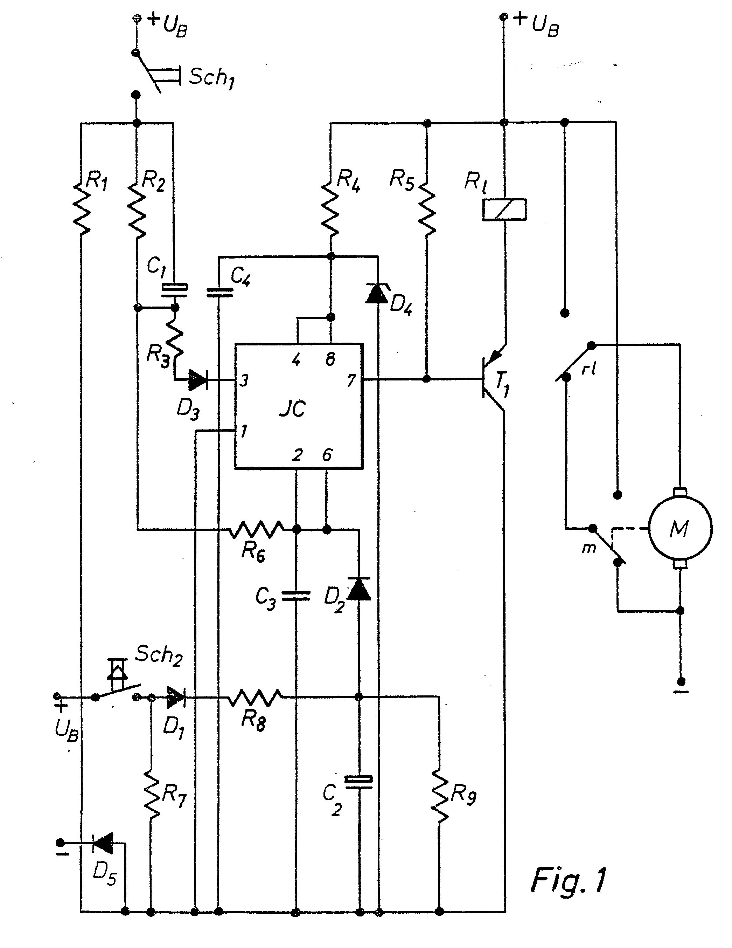

Die Schaltung nach Fig. 1 ist einerseits an die Versorgungsspannung+$U_B$ und anderseits an die Bezungsspannungs—der Bordspannungsquelle angeschlossen. Das Intervallwischen wird über einen rastenden Schalter $Sch_1$ eingeschal-

tet. Beim Einschalten wird die positive Spannung $+U_B$ über einen Kondensator $C_1$ und einen Widerstand $R_6$ an einen 2/6-Eingung der Schwellenwertschaltung IC gelegt. Infolgedessen wird die 2/3-$U_B$-Schwelle am 2/6-Eingang der Schwellenwertschaltung IC überschritten, so daß die Schwellenwertschaltung anspricht und der Umladeausgang 3 und der Steuerausgang 7 umgeschaltet werden. Der Umladeausgang 3 wird dabei von positivem Potential $+U_B$ auf Massepotential umgeschaltet. Der Steuerausgang 7, der eine Kollektorleitung eines Transistors ist, wird vom nichtleitenden Zustand entsprechend einem Sperrzustand des Kollektors auf den Leitungszustand umgeschaltet, so daß Strom fließt und der Steuerausgang 7 im wesentlichen auf Massepotential kommt. Durch dieses Massepotential am Steuerausgang 7 wird der Transistor $T_1$ durchgeschaltet, so daß das Relais R1 Strom erhält. Der Relaiskontakt r1 wird umgelegt, so daß der Scheibenwischermotor M mit dem Versorgungspotential $+U_B$ verbunden wird. Der Scheibenwischermotor läuft für ein Wischintervall an. Entsprechend dem Anlaufen des Scheibenwischermotors M erreicht die Endabstellungskontaktzunge m das positive Segment und wird auf die Versorgungsspannung $+U_B$ umgelegt. Der Scheibenwischermotor erhält dann über diese Endabstellungskontaktzunge seinen Strom und läuft über ein volles Wischintervall weiter.

Das Massepotential am Umladeausgang 3 bewirkt über den Widerstand $R_3$ und die Diode $D_3$ eine Aufladung des Kondensators $C_1$ auf die durch die Widerstände $R_2$ und $R_3$ festgelegte Teilspannung. Dadurch sinkt das Potential am Verbindungspunkt zwischen dem Kondensator $C_1$ und dem Widerstand $R_3$ ab. Dieses Potential liegt an dem 2/6-Eingang der Schwellenwertschaltung an. Sobald das Potential den 1/3-$U_B$-Wert erreicht, schaltet die Schwellenwertschaltung zurück. Die Ladezeit des RC-Gliedes $C_1$, $R_2$, $R_3$ muß so eingestellt sein, daß während der Motorlaufzeit für ein Wischintervall eine Ladung auf 1/3-$U_B$ immer gewährleistet ist. Bei Erreichen der 1/3-$U_B$-Schwelle wird der über den Steuerausgang 7 fließende Kollektorstrom gesperrt und der Umladeausgang 3 wird auf das positive Potential gelegt. Infolgedessen wird der Transistor $T_1$ gesperrt und das Relais E1 fällt ab. Der Motor läuft jedoch über seinen Endabstellungskontakt und den Ruhekontakt des Relais weiter, bis der Endabstellungskontakt in der Ruhelage das Massesegment erreicht.

Mit der Umschaltung des Umladeausgangs 3 beginnt die Entladung des Kondensators $C_1$ über den Widerstand $R_2$. Sobald die Entladung soweit fortgeschritten ist, daß am Verbindungspunkt zwischen dem Kondensator $C_1$ und dem Widerstand $R_3$ die 2/3-$U_B$-Schwelle erreicht ist, schaltet die Schwellenwertschaltung wieder um, so daß ein neues Wischintervall einsetzt.

Die Gesamtimpulsdauer des Intervallwischens wird durch die astabile Kippschaltung aus dem RC-Glied und der Schwellenwertschaltung festgelegt, nämlich einerseits durch die Aufladezeit und andererseits durch die Entladezeit.

Mit der Schwellenwertschaltung ist ein Trockenwischkreis verbunden, der über einen nichtrastenden Schalter $Sch_2$ eingeschaltet werden kann. über diesen nichtrastenden Schalter $Sch_2$ wird Versorgungsspannung $+U_B$ angelegt, so daß der Kondensator $C_2$ über die Diode $D_1$ und den Widerstand $R_8$ aufgeladen wird. Das Potential des Kondensators $C_2$ wird über die Diode $D_2$ an den 2/6-Eingang der Schwellenwertschaltung IC gelegt. Sobald die 2/3-$U_B$-Schwelle erreicht ist, schaltet der Steuerausgang 7 auf Massepotential. Der Transistor $T_1$ wird durchgesteuert und das Relais R1 wird erregt, so daß über den Relaiskontakt r1 der Scheibenwischermotor M anläuft. Dieser Schaltzustand bleibt so lange erhalten, wie über den Schalter $Sch_2$ Versorgungsspannung anliegt. Sobald der Schalter $Sch_2$ öffnet, entlädt sich der Kondensator $C_2$ über den Widerstand $R_9$. Wenn die Spannung am 2/6-Eingang der Schwellenwertschaltung die 1/3-$U_B$-Schwelle unterschreitet, schaltet die Schwellenwertschaltung IC zurück. Damit fällt das Relais R1 ab. Der Scheibenwischermotor läuft mit Hilfe des Endabstellungskontakts m in seine Ruhelage zurück.

Die Widerstände $R_1$ und $R_7$ legen die Eingänge der betreffenden Schaltungen in nichtangesteuertem Zustand auf Massepotential fest. Hierdruch wird erreicht, daß Störpotentiale über hochohmige Widerstände ohne Wirkung bleiben.

Die Kondensatoren $C_3$ und $C_4$ dienen zur Unterdrückung von Störspannungsspitzen. Die Zenerdiode $D_4$ unterdrückt längere Störspannungsimpulse. Ein Widerstand $R_4$ dient als Strombegrenzungswiderstand für die Zenerdiode und als Widerstand in dem RC-Kreis $R_4C_4$; dadurch werden Hochfrequenzstörspannungsspitzen unterdrückt, die zu einer Zerstörung des Schaltkreises führen könnten. Die Diode $D_5$ verbindet die Masseleitung der Schaltung mit dem Bezugspotential. Dadurch wird der Kreis gegen eine Verpolung gesichert.

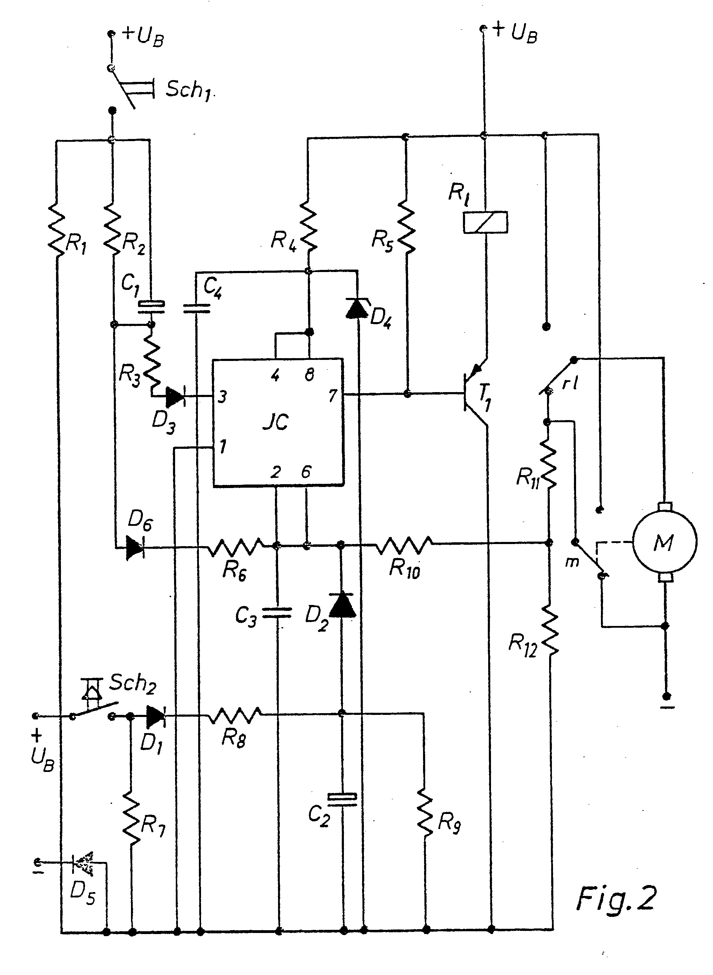

Fig. 2 zeigt eine abgewandelte Ausführungsform der Erfindung, bei der der Endabstellungskontakt m über einen Spannungsteiler $R_{11}$ und $R_{12}$ mit der gemeinsamen Masseleitung verbunden ist. Die Teilspannung am Verbindungspunkt der Widerstände $R_{11}$ und $R_{12}$ liegt über einem Widerstand $R_{10}$ an dem 2/6-Eingang der Schwellenwertschaltung IC an. Eine Diode $D_6$ ist als Entkopplungsglied zwischen den Kondensator $C_1$ und den 2/6-Eingang der Schwellenwertschaltung eingeschaltet.

Die Einschaltung dieser Intervallschaltung erfolgt genau wie oben erläutert. Sobald der Endabstellungskontakt m auf das positive Segment umschaltet, bildet sich an dem Ver-

bindungspunkt der Widerstände $R_{11}$ und $R_{12}$ eine Teilspannung in der Große 1/2 $U_B$ aus, die an dem 2/6-Eingang der Schwellenwertschaltung IC anliegt. Diese Spannung hält die Schwellenwertschaltung während des Wischintervalls sicher in ihrem Umschaltzustand, so daß der Transistor $T_1$ durchgeschaltet bleibt und durch das Relais E1 Strom fließt. Infolgedessen erfolgt die Stromversorgung des Scheibenwischermotors über den Relaiskontakt r1. Die Aufladezeit des Kondensators $C_1$ muß so bemessen sein, daß der Endabstellungskontakt m sicher das positive Segment erreicht. Es genügt also als Aufladezeit eine Zeitdauer von mehr als 0,4 s, insbesondere zwischen 0,4 bis 0,9 s. Solange über den Endabstellungskontakt m an dem 2/6-Eingang der Schwellenwertschaltung IC die Spannung 1/2 $U_B$ anliegt, ist eine Rückschaltung der Schwellenwertschaltung nicht möglich. Infolgedessen wird über den Endabstellungskontakt m die astabile Kippstufe synchronisiert. Diese Schaltung nach Fig. 2 legt damit die Pausenzeit fest.

Die Anschaltung des Trockenwischkreises entspricht genau der Ausführungsform nach Fig. 1.

**Patentansprüche**

1. Intervallschaltung für einen Kraftfahrzeugscheibenwischermotor (M), mit einem Umschalter ($r_1$), der bei Ansteuerung durch eine elektronische Schaltstufe ($T_1$) den Motor mit der Versorgungsspannung verbindet, und mit einem Endabstellungsschalter (m), dessen Umschaltkontakt in der Betriebsstellung des Motors mit der Versorgungsspannung und in der Endstellung mit dem Bezugspotential verbunden ist:

— die elektronische Schaltstufe ($T_1$) ist an einen Steuerausgang (7) einer Schwellenwertschaltung (IC) angeschlossen, die ihrerseits durch eine von einem RC-Glied ($C_1$, $R_2$, $R_3$) zwischen Kondensator ($C_1$) und Ladewiderstand ($R_3$) abgegriffene Spannung ansteuerbar ist;
— das RC-Glied ($C_1$, $R_2$, $R_3$) ist zwischen der Versorgungspannung und einem Umladeanschluß angeschlossen, der entweder mit der Versorgungsspannung oder mit dem Bezugspotential verbindbar ist, wobei die Umladegeschwindigkeit die Pausenzeit der Intervallschaltung bestimmt;

gekennzeichnet durch folgende Merkmale:

— die Schwellenwertschaltung (IC) spricht auf eine Umschaltspannung und eine davon verschiedene Rückschaltspannung an ihrem Schwellenwerteingang (2, 6) an und weist als Ausgang (3) den genannten Umladeanschluß auf;
— das RC-Glied ($C_1$, $R_2$, $R_3$) wird aufgrund der nach Umschaltung am Umladeausgang (3) auftretenden Bezugsspannung über einen in Reihe mit dem Kondensator ($C_1$) liegenden Widerstand ($R_3$) und einen für den Aufladestrom durchlässigen Richtleiter ($D_3$) aufgeladenen und aufgrund der Versorgungsspannung am Umladeausgang über einen parallel zum Kondensator ($C_1$) liegenden Widerstand ($R_2$) entladen.

2. Intervallschaltung nach Anspruch 1, dadurch gekennzeichnet, daß das RC-Glied ($C_1$, $R_2$, $R_3$) über einen rastenden Schalters ($Sch_1$) mit der Versorgungsspannung verbindbar ist.

3. Intervallschaltung nach Anspruch 1, dadurch gekennzeichnet, daß der Steuerausgang (7) als Kollektorleitung eines Transistors ausgebildet ist und mit einem Kollektorwiderstand ($R_5$) sowie mit der Basis eines Schalttransistors ($T_1$) verbunden ist.

4. Intervallschaltung nach Anspruch 1, dadurch gekennzeichnet, daß die Endabstellungskontaktzunge (m) mit einem Spannungsteiler ($R_{11}$, $R_{12}$) verbunden ist und daß eine Teilspannung dieses Spannungsteilers an dem Schwellenwerteingang (2, 6) anliegt.

5. Intervallschaltung nach Anspruch 4, dadurch gekennzeichnet, daß zwischen das RC-Glied und den Schwellenwerteingang ein Richtleiter ($D_6$) als Entkopplungsglied eingefügt ist.

6. Intervallschaltung nach Anspruch 1, dadurch gekennzeichnet, daß ein weiteres RC-Glied ($C_2$, $R_9$) als Trockenwischkreis über ein Entkopplungsglied ($D_2$) an den Schwellenwerteingang angeschlossen ist.

7. Intervallschaltung nach Anspruch 1, dadurch gekennzeichnet, daß eine gemeinsame Bezugsspannungsleitung der Schaltung über einen Richtleiter ($D_5$) mit der Bezugsspannungsleitung der Bordspannungsquelle verbunden ist.

**Revendications**

1. Montage d'intermittence pour un moteur d'essuie-glace de véhicule automobile (M), avec un inverseur (r1) qui, lors de l'excitation par un étage de commande électronique ($T_1$), relie le moteur à la tension d'alimentation, et avec un commutateur d'arrêt en fin de course (m) dont le contact d'inversion est relié, dans la position de fonctionnement du moteur, à la tension d'alimentation et, dans la position de fin de course, au potentiel de référence;

— l'étage de commande électronique ($T_1$) est connecté à une sortie de commande (7) d'un circuit de valeur de seuil (IC) qui peut être excité à son tour par une tension obtenue à partir d'une cellule à résistance et capacité ($C_1$, $R_2$, $R_3$) entre le condensateur ($C_1$) et la résistance de charge ($R_3$);
— la cellule à résistance et capacité ($C_1$, $R_2$, $R_3$) est connectée entre la tension d'alimentation et une connexion d'inversion de charge qui peut être reliée soit à la tension d'alimentation, soit au potentiel de référence, la vitesse d'inversion de charge déterminant le temps de pause du montage d'intermittence;

caractérisé par les éléments suivants:

— le circuit de valeur de seuil (IC) répond à une tension d'inversion et à une tension de retour à l'état initial en différant à son entrée de valeur de seuil (2, 6) et présente comme sortie (3) la connexion d'inversion de charge précitée;

— la cellule à résistance et capacité ($C_1$, $R_2$, $R_3$) est chargée sur la base de la tension de référence apparaissant après inversion à la sortie d'inversion de charge (3), par l'intermédiaire d'une résistance ($R_3$) située en série avec le condensateur ($C_1$) et d'un redresseur ($D_3$) conducteur pour le courant de charge, et est déchargée sur la base de la tension d'alimentation à la sortie d'inversion de charge, par l'intermédiaire d'une résistance ($R_2$) située en parallèle avec le condensateur ($C_1$).

2. Montage d'intermittence suivant la revendication 1, caractérisé en ce que la cellule à résistance et capacité ($C_1$, $R_2$, $R_3$) peut être connectée par un commutateur à encliquetage ($Sch_1$), à la tension d'alimentation.

3. Montage d'intermittence suivant la revendication 1, caractérisé en ce que la sortie de commande (7) est réalisée en tant que conducteur de collecteur d'un transistor et est reliée à une résistance de collecteur ($R_5$) ainsi qu'à la base d'un transistor de commande ($T_1$).

4. Montage d'intermittance suivant la revendication 1, caractérisé en ce que la lame de contact d'arrêt en fin de course (m) est reliée à un diviseur de tension ($R_{11}$, $R_{12}$), et en ce qu'une tension partielle de ce diviseur de tension est appliquée à l'entrée de valeur de seuil (2, 6).

5. Montage d'intermittence suivant la revendication 4, caractérisé en ce qu'entre la cellule à résistance et capacité et l'entrée de valeur de seuil est intercalé un redresseur ($D_6$) en tant qu'élément de découplage.

6. Montage d'intermittence suivant la revendication 1, caractérisé en ce qu'une autre cellule à résistance et capacité ($C_2$, $R_9$) est connectée en tant que circuit d'essuyage à sec, par l'intermédiaire d'un élément de découplage ($D_2$), à l'entrée de valeur de seuil.

7. Montage d'intermittence suivant la revendication 1, caractérisé en ce qu'une ligne de tension de référence commune du montage est reliée par l'intermédiaire d'un redresseur ($D_5$), à la ligne de tension de référence de la source de tension de bord.

**Claims**

1. Intermittent control circuit for a motor vehicle windscreen-wiper motor (M) comprising a change-over switch ($r_1$) which under activation of an electronic switching stage ($T_1$) connects the motor with the reference voltage, and comprising a terminal limit switch (m) the change-over contact of which is connected with the supply voltage in the activated state of the motor and with the reference voltage in the terminal state:

— the electronic switching stage ($T_1$) is connected with a control output (7) of a threshold value circuit (IC) which may be activated by a voltage tapped off between a capacitor ($C_1$) and a charging resistor ($R_3$) of a RC-circuit ($C_1$, $R_2$, $R_3$);

— the RC circuit ($C_1$, $R_2$, $R_3$) is connected between the supply voltage and a reversing connection which is connectable either with the supply voltage or with the reference voltage whereby the reversing velocity determines the pausing time of the intermittent circuit;

characterized by the following features:

— the threshold value circuit (IC) responds to a reversing voltage and a different step-back voltage at its threshold value input (2, 6) and has as output (3) the above reversing connection;

— the RC-circuit ($C_1$, $R_2$, $R_3$) is charged by way of a resistor ($R_3$) connected in series to the capacitor ($C_1$) and to a rectifier element conducting the charging current when the reference voltage is applied to the reversing connection after change-over and discharged by way of a resistor ($R_2$) connected parallel to the capacitor ($C_1$) when the supply voltage is applied to the reversing connection.

2. Intermittent circuit according to Claim 1, characterized in that the RC-circuit ($C_1$, $R_2$, $R_3$) is connectable to the supply voltage by means of a lockable switch.

3. Intermittent circuit according to Claim 1, characterized in that the control output (7) is provided in the form of a collector conduit of a transistor and is connected with the collector resistor ($R_5$) and with the base of a switching transistor ($T_1$).

4. Intermittent circuit according to Claim 1, characterized in that the terminal limit contact tongue (m) is connected with a voltage divider ($R_{11}$ and $R_{12}$) and that a partial voltage of said voltage divider is applied to the threshold value input (2, 6).

5. Intermittent circuit according to Claim 4, characterized in that a rectifier element ($D_6$) is provided to serve as a isolating circuit between the RC-circuit and the threshold value input.

6. Intermittent circuit according to Claim 1, characterized in that a RC-circuit ($C_2$, $R_9$) is provided to serve as a dry wiping circuit and connected, by means of an isolating element (D$_2$), with the threshold value input.

7. Intermittent circuit according to Claim 1, characterized in that a common reference voltage lead of the circuit is connected by means of a rectifier element (D$_5$) to the reference voltage lead of the vehicle power supply.

0016 864

Fig.1

Fig.2